# EUROPEAN PATENT APPLICATION

(11) **EP 4 016 384 A1**
(43) Date of publication of application: **22.06.2022**
(21) Application number: 19941936.7
(22) Date of filing: 16.08.2019
(51) Int. Cl.: G06K 9/20, G06Q 30/08

(54) **METHOD, APPARATUS AND SYSTEM FOR IDENTIFYING ITEM ON SHELF**

(71) Applicant: Hanshow Technology Co., Ltd., Jiaxing, Zhejiang 314031 (CN)
(72) Inventor: LIANG, Min, Jiaxing, Zhejiang 314000 (CN); HOU, Shiguo, Jiaxing, Zhejiang 314000 (CN); ZHUANG, Yitang, Jiaxing, Zhejiang 314000 (CN); JIN, Xiaoping, Jiaxing, Zhejiang 314000 (CN); ZHANG, Caidie, Jiaxing, Zhejiang 314000 (CN); SU, Xunyuan, Jiaxing, Zhejiang 314000 (CN)
(74) Representative: Patentanwälte Olbricht Buchhold Keulertz
(86) International application number: PCT/CN2019/100902
(87) International publication number: WO 2021/030924

(57) **Abstract**

A method, apparatus and system for identifying an item on a shelf. The method comprises: obtaining an image of a shelf (101); detecting an electronic shelf label on the shelf from the image of the shelf (102); identifying an identifier of the electronic shelf label (103); and determining, by querying a correlation between the identifier of the electronic shelf label and an item, the item corresponding to the electronic shelf label (104). The present invention can accurately identify an item on a shelf with high efficiency and expandability.

## Description

### TECHNICAL FIELD

The present invention relates to the field of Internet, and particularly to a method, an apparatus and a system for identifying an item on a shelf.

### BACKGROUND

The identification of shelf items (e.g., commodities) has long been concerned in shopping malls and supermarkets. The traditional identification method is collecting pictures of items for labeling, then training a deep learning algorithm with the pictures to generate a model, and identifying the items through the model. However, the traditional method has two intractable problems. Firstly, the number of the items is very large, so massive training data of the items needs to be collected for training, which is low in efficiency. Secondly, the types of the items are constantly increased and updated, so it is necessary to continuously update the training data to identify new items, which is low in expandability. These two problems have caused great obstacles to wide application of the identification of items.

### SUMMARY

An embodiment of the present invention provides a method for identifying an item on a shelf with high efficiency and expandability. The method comprises:
obtaining an image of a shelf;
detecting an electronic shelf label on the shelf from the image of the shelf;
identifying an identifier of the electronic shelf label; and
determining, by querying a correspondence between the identifier and an item, the item corresponding to the electronic shelf label.

An embodiment of the present invention provides an apparatus for identifying an item on a shelf with high efficiency and strong expandability. The apparatus comprises:
obtaining an image of a shelf;
detecting an electronic shelf label on the shelf from the image of the shelf;
identifying an identifier of the electronic shelf label; and
determining, by querying a correspondence between the identifier and an item, the item corresponding to the electronic shelf label.

An embodiment of the present invention provides a system for identifying an item on a shelf with high efficiency and strong expandability. The apparatus comprises: the aforementioned apparatus, and a camera configured to capture an image of the shelf and send the image of the shelf to the apparatus.

An embodiment of the present invention further provides a computer device comprising a memory, a processor and a computer program stored in the memory and executable on the processor, wherein the processor is configured to execute the computer program to implement the aforementioned method.

An embodiment of the present invention further provides a computer-readable storage medium storing a computer program for implementing the aforementioned method.

In the embodiments of the present invention, an image of a shelf is obtained; an electronic shelf label on the shelf is detected from the image of the shelf; an identifier of the electronic shelf label is identified; and by querying a correspondence between the identifier of and an item, the item corresponding to the electronic shelf label is determined. In the above process, it is only necessary to detect the electronic shelf label on the shelf based on the image of the shelf, without detecting each item. Compared with the detection of the item, the detection of the electronic shelf label needs less workload and has higher efficiency. Further, when the types of items are increased, it is only necessary to re-identify the electronic shelf label, without identifying new items using a large number of shelf images, thereby improving the identification efficiency and the expandability.

### BRIEF DESCRIPTION OF DRAWINGS

For clearer illustration of the embodiments in the present invention or the prior art, a brief description of the drawings for the embodiments or the prior art will be given below. Obviously, the drawings described below involve only some embodiments of this invention. For those of ordinary skill in the art, other drawings can be derived from these drawings without any inventive efforts. In the drawings:
Fig. 1 is a flowchart of a method for identifying an item on a shelf according to an embodiment of the present invention;
Fig. 2 is a schematic diagram of an image of a shelf according to an embodiment of the present invention;
Fig. 3 is a schematic diagram of an electronic shelf label detection according to an embodiment of the present invention;
Fig. 4 is a schematic diagram of a planogram of items on the shelf according to an embodiment of the present invention;
Fig. 5 is a detailed flowchart of a method for identifying an item on a shelf according to an embodiment of the present invention;
Fig. 6 is a schematic diagram of an apparatus for identifying an item on a shelf according to an embodiment of the present invention;
Fig. 7 is a schematic diagram of a system for identifying an item on a shelf according to an embodiment of the present invention.

### DESCRIPTION OF EMBODIMENTS

For a clearer understanding of the objectives, technical features and effects of the embodiments of the present invention, specific embodiments will now be described with reference to the drawings. The described embodiments are intended only to schematically illustrate and explain the present invention, rather than limit the scope of the present invention.

In the description of this specification, 'include', 'comprise', 'have', 'contain', etc. used are all open wordings, and they mean 'including but not limited to'. The description with reference to the terms 'one embodiment', 'one specific embodiment', 'some embodiments', 'for example', etc. mean that specific features, structures or characteristics described in connection with the embodiment(s) or example(s) are included in at least one embodiment or example of the present invention. In this specification, the schematic expressions of the above terms do not necessarily refer to the same embodiment or example. Further, the described specific features, structures or characteristics can be combined in any one or more embodiments or examples in a suitable way. The sequence of steps involved in each embodiment is used to schematically illustrate the implementation of the present invention, while the sequence of steps is not limited and can be appropriately adjusted as needed.

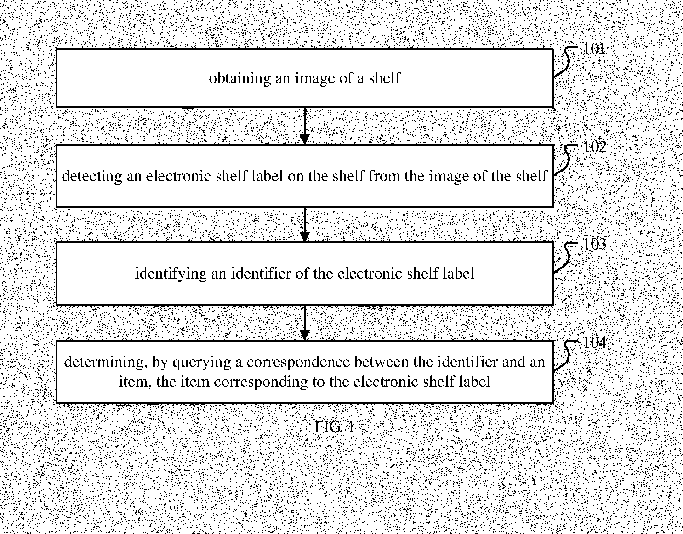

Fig. 1 is a flowchart of a method for identifying an item on a shelf according to an embodiment of the present invention. As illustrated in Fig. 1, the method comprises:
step 101: obtaining an image of a shelf;
step 102: detecting an electronic shelf label on the shelf from the image of the shelf;
step 103: identifying an identifier of the electronic shelf label; and
step 104: determining, by querying a correspondence between the identifier and an item, the item corresponding to the electronic shelf label.

In the embodiment of the present invention, an image of a shelf is obtained; an electronic shelf label on the shelf is detected from the image of the shelf; an identifier of the electronic shelf label is identified; and by querying a correspondence between the identifier and an item, the item corresponding to the electronic shelf label is determined. In the above process, it is only necessary to detect the electronic shelf label on the shelf based on the image of the shelf, without detecting each item. Compared with the detection of the item, the detection of the electronic shelf label needs less workload and has higher efficiency. Further, when the types of items are increased, it is only necessary to re-identify the electronic shelf label, without identifying new items using a large number of shelf images, thereby improving the identification efficiency and the expandability.

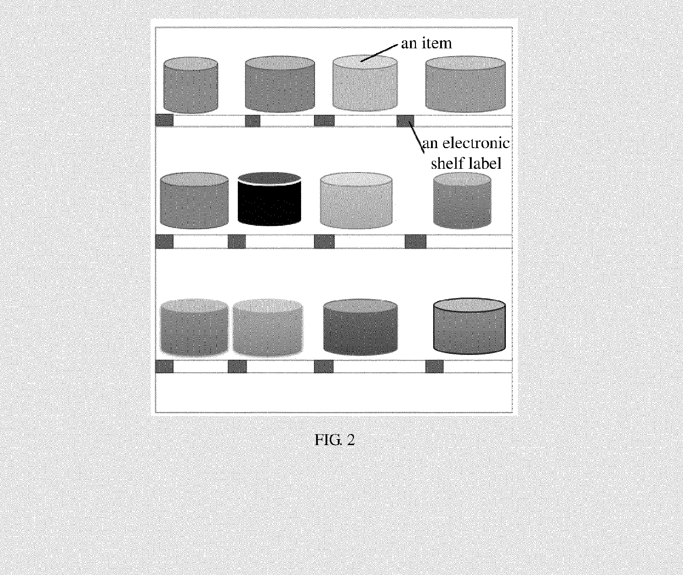

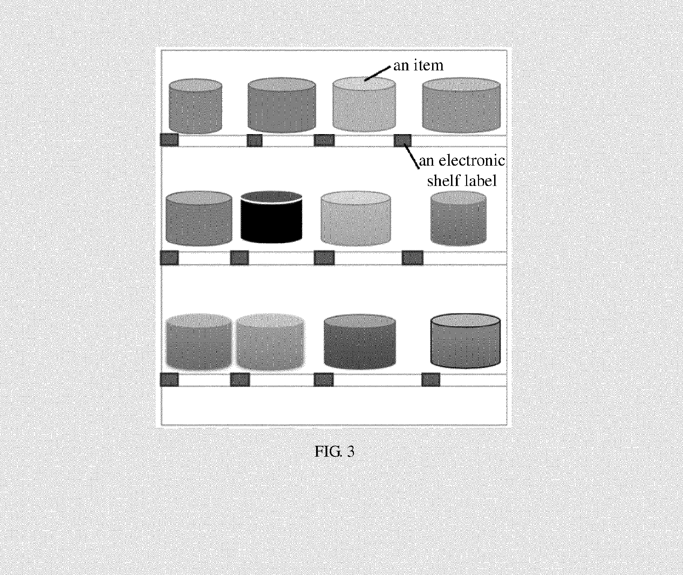

During specific implementations, in step 101, various devices such as a camera, a camcorder and a high-speed photographic instrument can be adopted to capture and obtain the image of the shelf. Fig. 2 is a schematic diagram of an image of a shelf according to an embodiment of the present invention, which includes items and electronic shelf labels, and each type of items has a corresponding electronic shelf label. In step 102, an electronic shelf label is searched from a corresponding image in Fig. 2. Fig. 3 is a schematic diagram of an electronic shelf label detection according to an embodiment of the present invention, wherein an electronic shelf label, including information such as a position thereof, can be detected. In this step, an electronic shelf label, rather than an item, is detected from the image. Compared with the detection of the item, the detection of the electronic shelf label with a fixed shape and position needs less workload and has higher efficiency and accuracy. In step 103, when the identifier of the electronic shelf label is to be identified, it can be obtained from a database of electronic shelf labels. In step 104, by querying a correspondence between the identifier of the electronic shelf label and an item, the item corresponding to the electronic shelf label is determined. For example, a correspondence between the electronic shelf label and an item SKU may be queried from the database, so as to determine the item corresponding to the electronic shelf label. When the types of items are increased, it is only necessary to re-detect the electronic shelf label, without identifying images of complex items from a large number of images, thereby improving the efficiency and the accuracy.

During specific implementations, there are many methods for detecting the electronic shelf label on the shelf from the image of the shelf, one embodiment of which is given below.

In one embodiment, detecting the electronic shelf label on the shelf from the image of the shelf comprises:
inputting the image of the shelf into a deep learning model to detect the electronic shelf label on the shelf.

In one embodiment, the deep learning model is obtained by a training which includes:
obtaining a historical image of the shelf;
extracting eigenvectors of the historical image; and
training the deep learning model with the eigenvectors.

During specific implementations, the commonly used deep learning model comprises an automatic encoder, a sparse encoder, a convolutional neural network, an RNN, an LSTM, etc. The training methods of the deep learning model are similar substantially, i.e., comprising three steps as described in the above embodiment. In addition, training the deep learning model with the eigenvectors specifically comprises: adjusting parameters of the deep learning model in the training, until a loss function of the deep learning model meets a preset convergence condition, thereby obtaining the trained deep learning model.

In another embodiment, the deep learning model is obtained by a training which includes:
dividing the historical image of the shelf into training set data and test set data;
extracting eigenvectors of the training set data;
training the deep learning model with the eigenvectors of the training set data;
adjusting parameters of the deep learning model in the training until a loss function of the deep learning model meets a preset convergence condition, thereby obtaining the trained deep learning model;
testing the trained deep learning model with the test set data;
if the accuracy of the trained deep learning model is lower than a preset accuracy, increasing the volume of the training set data, or adjusting a ratio of the training set data to the test set data, retraining until the accuracy of the trained deep learning model is not lower than the preset accuracy.

The above embodiment introduces the training process of the deep learning model, i.e., the historical image of the shelf is required when using the deep learning model to identify the electronic shelf label on the shelf. During specific applications, there are many methods for training the deep learning model based on the historical image of the shelf, and two embodiments of which are given below.

In one embodiment, after obtaining the historical image of the shelf, the training further comprises:
searching an image showing the identifier of the electronic shelf label from the historical image of the shelf;
extracting the eigenvectors of the historical image comprises:
extracting the eigenvectors from the image showing the identifier of the electronic shelf label.

In the above embodiment, there are many images of electronic shelf labels in the historical image of the shelf, and the displaying of the electronic shelf label is constantly updated along with time. At a certain moment, the identifier of the electronic shelf label, such as a specific code of the electronic shelf label, may be displayed. So the image showing the identifiers of the electronic shelf labels can be found, and the eigenvectors thereof can be extracted to train the deep learning model.

In another embodiment, after obtaining the historical image of the shelf, the training further comprises:
obtaining a lighting sequence image of the electronic shelf label from the historical image of the shelf;
extracting the eigenvectors of the historical image comprises:
extracting the eigenvectors from the lighting sequence image.

In the above embodiment, the electronic shelf label periodically displays flashes of different colors. For example, with white as a starting color, {white, red, blue and green} may be a lighting sequence of an electronic shelf label, and {white, green, blue and red} may be a lighting sequence of another electronic shelf label, so that the electronic shelf labels can be distinguished by the lighting sequences. Therefore, the lighting sequence image of the electronic shelf label can be obtained from the historical image of the shelf, and the eigenvectors thereof can be extracted to train the deep learning model.

Of course, it can be understood that other ways may be used to train the deep learning model, and all relevant variations should fall within the scope of the present invention.

In one embodiment, the method further comprises:
obtaining a wireless signal frequency at which heartbeat data of the electronic shelf label is received by a base station;
determining a shelf where the electronic shelf label is located according to the wireless signal frequency at which the heartbeat data of the electronic shelf label is received by the base station;
performing, if the determined shelf where the electronic shelf label is located does not match the image of the shelf from which the electronic shelf label is detected, the following steps iteratively until the determined shelf matches the image of the shelf:
   obtaining another image of the shelf; and
   detecting the electronic shelf label from the another image.

In the above embodiment, the wireless signal frequencies, at which the heartbeat data of different electronic shelf labels is received by the base station, are different from each other. Therefore, a shelf where an electronic shelf label is located can be determined from a stored correspondence between the wireless signal frequencies and the electronic shelf labels. For example, determining the position of the shelf where the electronic shelf label is located, and if the determined shelf does not match the image of the shelf where the electronic shelf label is detected, performing the following steps iteratively until the determined shelf matches the image of the shelf: obtaining another image of the shelf; and detecting the electronic shelf label from the another image. In addition, joint translocation can be achieved through a fusion of the deep learning model and the wireless signal frequency based on the base station, thereby improving the accuracy of the shelf item identification.

In one embodiment, the identifier of the electronic shelf label comprises a code of the electronic shelf label.

Of course, it can be understood that other ways such as a name may be used to represent the identifier of the electronic shelf label, and all relevant variations fall within the scope of the present invention.

In one embodiment, detecting the electronic shelf label on the shelf from the image of the shelf comprises: detecting a position of the electronic shelf label on the shelf from the image of the shelf;
the method further comprises:
generating a planogram of items on the shelf based on the detected position of the electronic shelf label on the shelf; and
detecting a stock state of the shelf based on the planogram.

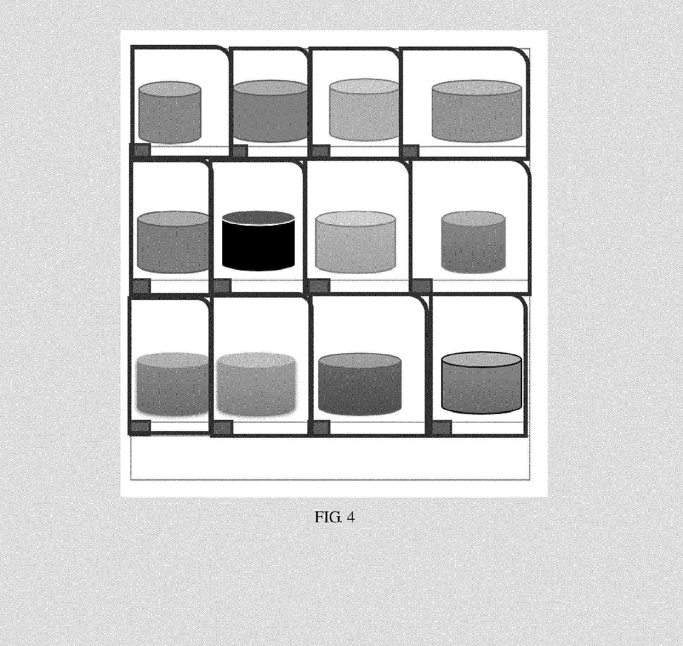

Fig. 4 is a schematic diagram of a planogram of items on a shelf according to an embodiment of the present invention, i.e., a type of items and a corresponding electronic shelf label may be put into a trellis of the planogram, so whether there is an item in each trellis can be easily detected.

In one embodiment, detecting the stock state of the shelf based on the planogram comprises:
for each trellis in the planogram, determining the stock state of the trellis without an item as out of stock, and determining the stock state of the trellis with an item as in stock.

In the above embodiment, the items corresponding to the electronic shelf label in each trellis may be searched from a database or any other data storage position, and if there is no item in the trellis, the stock state of the trellis is out of stock; otherwise, the stock state of the trellis is in stock.

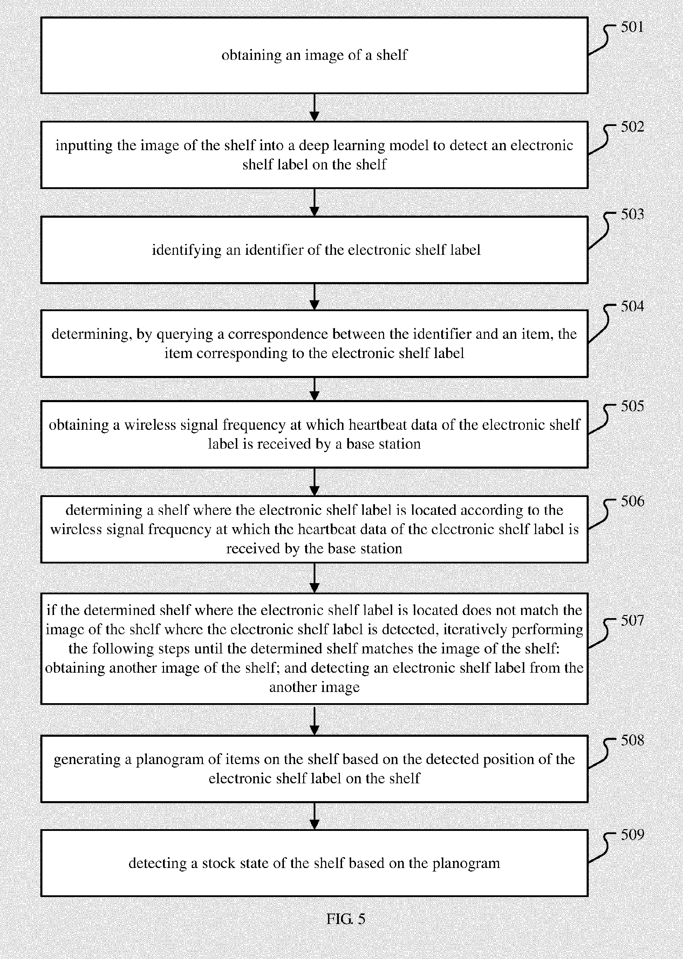

Based on the above embodiment, the present invention provides the following embodiment to illustrate a detailed flow of the method for identifying an item of a shelf. Fig. 5 is a detailed flowchart of the method according to an embodiment of the present invention. As illustrated in Fig. 5, in one embodiment, the detailed flow of the method comprises:
step 501: obtaining an image of a shelf;
step 502: inputting the image of the shelf into a deep learning model to detect an electronic shelf label on the shelf, which comprises detecting a position of the electronic shelf label on the shelf from the image of the shelf;
step 503: identifying an identifier of the electronic shelf label;
step 504: determining, by querying a correspondence between the identifier and an item, the item corresponding to the electronic shelf label;
step 505: obtaining a wireless signal frequency at which heartbeat data of the electronic shelf label is received by a base station;
step 506: determining a shelf where the electronic shelf label is located according to the wireless signal frequency at which the heartbeat data of the electronic shelf label is received by the base station;
step 507: if the determined shelf where the electronic shelf label is located does not match the image of the shelf where the electronic shelf label is detected, iteratively performing the following steps until the determined shelf matches the image of the shelf: obtaining another image of the shelf; and detecting an electronic shelf label from the another image;
step 508: generating a planogram of items on the shelf based on the detected position of the electronic shelf label on the shelf;
step 509: detecting a stock state of the shelf based on the planogram.

Of course, it can be understood that there may be other variations in the detailed flow of the method, and all relevant variations should fall within the scope of the present invention.

To sum up, in the method provided by the embodiments of the present invention, an image of a shelf is obtained; an electronic shelf label on the shelf is detected from the image of the shelf; an identifier of the electronic shelf label is identified; and by querying a correspondence between the identifier and an item, the item corresponding to the electronic shelf label is determined. In the above process, it is only necessary to detect the electronic shelf label on the shelf based on the image of the shelf, without detecting each item. Compared with the detection of the item, the detection of the electronic shelf label needs less workload and has higher efficiency. Further, when the types of items are increased, it is only necessary to re-identify the electronic shelf label, without identifying new items using a large number of shelf images, thereby improving the identification efficiency and the expandability. In addition, joint translocation can be achieved through a fusion of the deep learning model and the wireless signal frequency based on the base station, thereby improving the accuracy of the shelf item identification.

Based on the same inventive concept, an embodiment of the present invention further provides an apparatus for identifying an item on a shelf, as described in the following embodiments. Since the principle for technical solution of the apparatus is similar to that of the method, the method as described above may be referred to for implementation, and the repetitive description is omitted here.

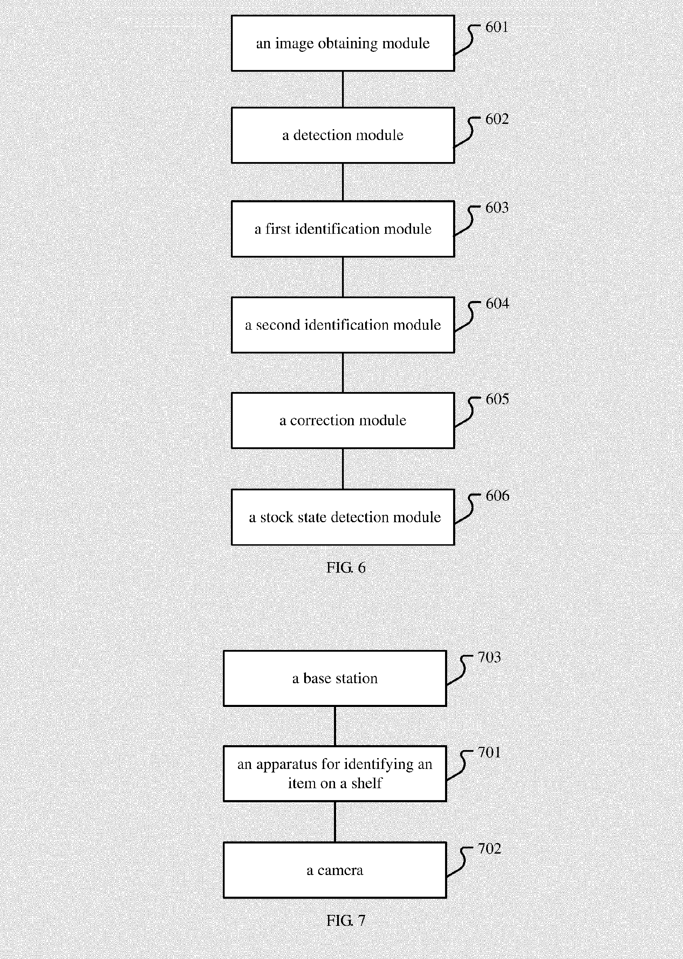

Fig. 6 is a schematic diagram of an apparatus for identifying an item on a shelf according to an embodiment of the present invention. As illustrated in Fig. 6, the apparatus comprises:
an image obtaining module 601 configured to obtain an image of a shelf;
a detection module 602 configured to detect an electronic shelf label on the shelf from the image of the shelf;
a first identification module 603 configured to identify an identifier of the electronic shelf label; and
a second identification module 604 configured to determine, by querying a correspondence between the identifier and an item, the item corresponding to the electronic shelf label.

In one embodiment, the apparatus further comprises a correction module 605 configured to:
obtain a wireless signal frequency at which heartbeat data of the electronic shelf label is received by a base station;
determine a shelf where the electronic shelf label is located based on the wireless signal frequency at which the heartbeat data of the electronic shelf label is received by the base station;
wherein, if the determined shelf where the electronic shelf label is located does not match the image of the shelf where the electronic shelf label is detected, the following steps are iteratively performed until the determined shelf matches the image of the shelf: obtaining, by the image obtaining module 601, another image of the shelf; and detecting, by the detection module 602, the electronic shelf label from the another image.

In one embodiment, the detection module 602 is further configured to detect a position of the electronic shelf label on the shelf from the image of the shelf;
the apparatus further comprises a stock state detection module 606 configured to:
generate a planogram of items on the shelf based on the detected position of the electronic shelf label on the shelf; and
detect a stock state of the shelf based on the planogram.

In one embodiment, the stock state detection module 606 is specifically configured to:
for each trellis in the planogram, determine the stock state of the trellis without an item as out of stock, and determine the stock state of the trellis with an item as in stock.

In one embodiment, the detection module 602 is specifically configured to:
input the image of the shelf into a deep learning model to detect the electronic shelf label on the shelf.

In one embodiment, the deep learning model is obtained by a training which includes obtaining a historical image of the shelf;
extracting eigenvectors s of the historical image; and
training the deep learning model with the eigenvectors.

In one embodiment, after obtaining the historical image of the shelf, the training further comprises:
searching an image showing the identifier of the electronic shelf label from the historical image of the shelf;
extracting the eigenvectors of the historical image comprises:
   extracting the eigenvectors from the image showing the identifier of the electronic shelf label.

In one embodiment, after obtaining the historical image of the shelf, the training further comprises:
obtaining a lighting sequence image of the electronic shelf label from the historical image of the shelf;
extracting the eigenvectors of the historical image comprises:
   extracting the eigenvectors from the lighting sequence image.

In one embodiment, the identifier of the electronic shelf label comprises a code of the electronic shelf label.

To sum up, in the apparatus provided by the embodiment of the present invention, an image of a shelf is obtained; an electronic shelf label on the shelf is detected from the image of the shelf; an identifier of the electronic shelf label is identified; and by querying a correspondence between the identifier and an item, the item corresponding to the electronic shelf label is determined. In the above process, it is only necessary to detect the electronic shelf label on the shelf based on the image of the shelf, without detecting each item. Compared with the detection of the item, the detection of the electronic shelf label needs less workload and has higher efficiency. Further, when the types of items are increased, it is only necessary to re-identify the electronic shelf label, without identifying new items using a large number of shelf images, thereby improving the identification efficiency and the expandability. In addition, joint translocation can be achieved through a fusion of the deep learning model and the wireless signal frequency based on the base station, thereby improving the accuracy of the shelf item identification.

An embodiment of the present invention further provides a system for identifying an item on a shelf. Fig. 7 is a schematic diagram of the system according to an embodiment of the present invention. The system comprises the apparatus 701 for identifying the item on the shelf and a camera 702, wherein the camera 702 is configured to capture an image of the shelf and send the image of the shelf to the apparatus.

In one embodiment, the system further comprises a base station 703 configured to receive heartbeat data of the electronic shelf label, and send a wireless signal frequency at which the heartbeat data of the electronic shelf label is received by the base station to the apparatus 701.

To sum up, in the system provided by the embodiment of the present invention, an image of a shelf is obtained; an electronic shelf label on the shelf is detected from the image of the shelf; an identifier of the electronic shelf label is identified; and by querying a correspondence between the identifier and an item, the item corresponding to the electronic shelf label is determined. In the above process, it is only necessary to detect the electronic shelf label on the shelf based on the image of the shelf, without detecting each item. Compared with the detection of the item, the detection of the electronic shelf label needs less workload and has higher efficiency. Further, when the types of items are increased, it is only necessary to re-identify the electronic shelf label, without identifying new items using a large number of shelf images, thereby improving the identification efficiency and the expandability. In addition, joint translocation can be achieved through a fusion of the deep learning model and the wireless signal frequency based on the base station, thereby improving the accuracy of the shelf item identification.

Those skilled in the art should understand that the embodiments of this invention can be provided as methods, systems or computer program products. Therefore, this invention may be implemented in the form of fully-hardware embodiments, fully-software embodiments, or combined software-hardware embodiments. In addition, this invention may employ the form of a computer program product implemented on one or more computer storage medium (including but not limited to disk memory, CD-ROM, and optical memory) containing computer programming code.

This invention is set forth by referring to flow charts and/or block diagrams for the methods, devices (systems), and computer program products of the embodiments. It should be understood that each process and/or block of the flow charts and/or block diagrams as well as combinations of the processes and/or boxes of the flow charts and/or block diagrams can be realized by computer program instructions. These computer program instructions can be provided to general-purpose computers, special-purpose computers, embedded processors or the processors of other programmable data processing devices to produce a machine, so that an apparatus for implementing the functions designated in one or more processes of the flowcharts and/or one or more blocks of the block diagrams can be produced by the instructions executed by the processor of the computer or other programmable data processing device.

These computer program instructions can also be stored in a computer-readable storage medium which can guide a computer or other programmable data processing device to operate in a particular way, so that an article of manufacture comprising an instruction apparatus can be produced by the instructions stored in the storage medium, with the instruction apparatus implementing the functions designated in one or more processes of the flowcharts and/or one or more blocks of the block diagram.

These computer program instructions may also be loaded onto a computer or other programmable data processing device to make the computer or other programmable data processing device perform a sequence of computer-implemented operations, so that the instructions executed by the computer or other programmable data processing device realize one or more processes of the flowcharts and/or one or more blocks of the block diagram.

The purpose, technical features and technical effects of the present invention have been further described above by means of some embodiments. It should be understood that the embodiments are meant to facilitate understanding of the principles of the present invention, rather than limit the scope of the present invention. Any modifications, alternations, improvements, etc., made by those skilled in the art without departing from the concepts and principles of this invention shall fall within the scope of the present invention.

## Claims

1. A method for identifying an item on a shelf, comprising:
obtaining an image of a shelf;
detecting an electronic shelf label on the shelf from the image of the shelf;
identifying an identifier of the electronic shelf label; and
determining, by querying a correspondence between the identifier and an item, the item corresponding to the electronic shelf label.

2. The method according to claim 1, wherein detecting the electronic shelf label on the shelf from the image of the shelf comprises:
inputting the image of the shelf into a deep learning model to detect the electronic shelf label on the shelf.

3. The method according to claim 2, wherein the deep learning model is obtained by a training which includes:
obtaining a historical image of the shelf;
extracting eigenvectors of the historical image; and
training the deep learning model with the eigenvectors.

4. The method according to claim 3, wherein after obtaining the historical image of the shelf, the training further comprises:
searching an image showing the identifier of the electronic shelf label from the historical image of the shelf;
extracting the eigenvectors of the historical image comprises:
extracting the eigenvectors from the image showing the identifier of the electronic shelf label.

5. The method according to claim 3, wherein after obtaining the historical image of the shelf, the training further comprises:
obtaining a lighting sequence image of the electronic shelf label from the historical image of the shelf;
extracting the eigenvectors of the historical image comprises:
extracting the eigenvectors from the lighting sequence image.

6. The method according to claim 1, further comprising:
obtaining a wireless signal frequency at which heartbeat data of the electronic shelf label is received by a base station;
determining a shelf where the electronic shelf label is located according to the wireless signal frequency at which the heartbeat data of the electronic shelf label is received by the base station;
performing, if the determined shelf where the electronic shelf label is located does not match the image of the shelf from which the electronic shelf label is detected, the following steps iteratively until the determined shelf matches the image of the shelf:
obtaining another image of the shelf; and
detecting the electronic shelf label from the another image.

7. The method according to claim 1, wherein the identifier of the electronic shelf label comprises a code of the electronic shelf label.

8. The shelf item identification method according to claim 1, wherein detecting the electronic shelf label on the shelf from the image of the shelf comprises: detecting a position of the electronic shelf label on the shelf from the image of the shelf;
the method further comprises:
generating a planogram of items on the shelf based on the detected position of the electronic shelf label on the shelf; and
detecting a stock state of the shelf based on the planogram.

9. The method according to claim 8, wherein detecting the stock state of the shelf based on the planogram comprises:
for each trellis in the planogram, determining the stock state of the trellis without an item as out of stock, and determining the stock state of the trellis with an item as in stock.

10. An apparatus for identifying an item on a shelf, comprising:
an image obtaining module configured to obtain an image of a shelf;
a detection module configured to detect an electronic shelf label on the shelf from the image of the shelf;
a first identification module configured to identify an identifier of the electronic shelf label; and
a second identification module configured to determine, by querying a correspondence between the identifier and an item, the item corresponding to the electronic shelf label.

11. The apparatus according to claim 10, further comprising a correction module configured to:
obtain a wireless signal frequency at which heartbeat data of the electronic shelf label is received by a base station;
determine a shelf where the electronic shelf label is located based on the wireless signal frequency at which the heartbeat data of the electronic shelf label is received by the base station;
wherein, if the determined shelf where the electronic shelf label is located does not match the image of the shelf where the electronic shelf label is detected, the following steps are iteratively performed until the determined shelf matches the image of the shelf:
obtaining, by the image obtaining module, another image of the shelf; and
detecting, by the detection module, the electronic shelf label from the another image.

12. The apparatus according to claim 10, wherein the detection module is further configured to detect a position of the electronic shelf label on the shelf from the image of the shelf;
the apparatus further comprises a stock state detection module configured to:
generate a planogram of items on the shelf based on the detected position of the electronic shelf label on the shelf; and
detect a stock state of the shelf based on the planogram.

13. A system for identifying an item on a shelf, comprising:
the apparatus for identifying an item on a shelf according to any one of claims 10 to 12; and
a camera configured to capture an image of the shelf and send the image of the shelf to the apparatus.

14. The system according to claim 13, further comprising:
a base station configured to receive heartbeat data of the electronic shelf label, and send a wireless signal frequency at which the heartbeat data is received by the base station to the apparatus.

15. A computer device comprising a memory, a processor and a computer program stored in the memory and executable on the processor, wherein the processor is configured to execute the computer program to implement the method according to any one of claims 1 to 9.

16. A computer-readable storage medium storing a computer program for implementing the method according to any one of claims 1 to 9.
